# EUROPEAN PATENT APPLICATION

(11) **EP 3 339 229 A1**
(43) Date of publication of application: **27.06.2018**
(21) Application number: 16382644.9
(22) Date of filing: 22.12.2016
(51) Int. Cl.: B66B 5/04

(54) **FALL-ARREST DEVICE TEST SYSTEM AND METHOD**

(71) Applicant: AIP APS, 3400 Hillerød (DK)
(72) Inventor: LEGUA, Carlos, 50015 ZARAGOZA (ES)
(74) Representative: ZBM Patents ApS

(57) **Abstract**

A fall-arrest device test system for testing a fall-arrest device configured to be mounted around a wire rope of an elevator. The test system further comprises a loading lever having a first end arranged to rotate around a pivot between a first operational position and a second operational position, and the loading lever being operatively coupled to the wire rope, such that when the loading lever is at the first operational position the lever stretches the wire rope and when the loading lever is at the second operational position the loading lever does not stretch the wire rope. Methods for testing such a fall-arrest device are also disclosed.

## Description

The present disclosure relates to fall-arrest device test systems, and further relates to methods for testing a fall-arrest device.

### BACKGROUND

Modern wind turbines are commonly used to supply electricity into the electrical grid. Wind turbines generally comprise a rotor mounted on top of a wind turbine tower, the rotor having a rotor hub and a plurality of blades. The rotor is set into rotation under the influence of the wind on the blades. The operation of the generator produces the electricity to be supplied into the electrical grid.

When maintenance works are required inside wind turbines, hoists are often used in the form of elevator-like structures where a lift platform or a cabin for the transportation of people and/or equipment is hoisted up and/or down within the wind turbine tower. Wind turbines are often provided with working platforms arranged at various heights along the height of the tower with the purpose of allowing workers to leave the cabin and inspect or repair equipment where intended.

Elevator systems, in general, include an elevator car being suspended within a hoistway or elevator shaft, in some cases by wire ropes. The term wire rope is herein used to denote a relatively thick cable. But in the art, the terms cables and wire ropes are often used interchangeably. In some systems, e.g. for some electric elevators, a counterweight may be provided depending on e.g. the available space. Other systems such as hydraulic elevators normally do not comprise a counterweight.

The service elevators may incorporate some form of traction device mounted on or attached to the elevator. The traction device may comprise a housing including a traction mechanism, e.g. a motor driven traction sheave. The motor typically may be an electrical motor, although in principle other motors could be used.

Service elevators further may incorporate an electromagnetic brake. In addition to this brake, a "secondary safety device" or "fall-arrest device" may be mounted on or attached to the elevator. Such a fall-arrest device serves as a back-up for the main electromagnetic brake and may typically incorporate some form of sensing mechanism sensing the elevator's speed. The secondary safety device may automatically block the elevator if the elevator moves too fast, i.e. when the elevator might be falling. The speed detection mechanism in this sense acts as an overspeed detector.

A hoisting wire rope of the service elevator or a dedicated safety wire rope may pass through an entry hole in the safety device, through the interior of the safety device and exit the safety device through an exit hole at an opposite end. Some form of clamping mechanism for clamping the hoisting wire rope or the safety wire rope when an unsafe condition exists (i.e. when the overspeed detector trips) may be incorporated in the safety device.

Fall-arrest devices, when fitted to an appropriate wire rope, can be of the type that comprises internal rollers and a clamping mechanism (e.g. involving clamping jaws) which closes onto the safety wire rope, which could be the main hoisting wire rope or a separate safety wire rope. These devices may comprise a centrifugal overspeed detector.

Such an overspeed detector may comprise a driven roller coupled with movable parts that are forced outwardly as the roller rotates when it is driven by the wire rope passing along it. In some examples, a pressure roller ensures the contact between the wire rope and the driven roller of the centrifugal overspeed detector. If the wire rope passes through the safety device too rapidly, the brake trips and the jaws clamp onto the wire, thus blocking the safety device on the wire rope.

Daily inspection of certain parts of a service elevator may be mandatory or recommended. Part of such a daily inspection can be an acceleration test, simulating a fall, which is supposed to activate the fall-arrest device, thus blocking the safety device on the wire rope.

A known way to test the fall-arrest device is the "stomp test". With the cabin of the service elevator in "parked" position, which is around 3 m / 10 ft. above the bottom landing floor, an operator starts descending towards the floor using the normal drive of the elevator. When the cabin starts descending, the operator executes a hard stomp with one foot in the cabin floor. The foot stomp should provoke the fall-arrest device to trip and arrest the descent of the cabin. If the fall-arrest device activates properly after the stomp, the fall-arrest device will hold the cabin on the safety wire and is therefore assumed to function properly.

However, if the fall-arrest device does not arrest the elevator at the first trial, then the elevator has to be re-established at the "parked" position and the test has to be executed one more time, stomping harder. The force exerted by a stomp will vary from operator to operator and from one test to another even for the same operator. As a result, the fall arrest device may not necessarily be reliably tested due to the fact that the stomp may not be hard enough to activate the fall-arrest device. Moreover, the test can be time-consuming i.e. the test may take up several trials to be properly conducted. Additionally, the test is cumbersome to carry out.

The present disclosure provides examples of systems and methods that at least partially resolve some of the aforementioned disadvantages.

Service elevators and related safety devices such as fall-arrest devices are not only used in wind turbine towers, but instead may be found in many different sites and structures. Examples of systems and methods according to the present disclosure may therefore also be found in structures other than wind turbine tower.

The words "elevators" and "lifts" are used interchangeably throughout the present disclosure. Also the words elevator "cabins" or "cars" are used interchangeably throughout the present disclosure

### SUMMARY

According to a first aspect, a fall-arrest device test system is provided. The test system serves for testing a fall-arrest device configured to be mounted around a wire rope of an elevator. The fall-arrest device comprises a clamping mechanism and an overspeed detector, the overspeed detector comprising a driven roller arranged to be driven by a wire rope and wherein the clamping mechanism is configured to clamp the wire rope if the overspeed detector detects a speed of the driven roller above a predetermined threshold. The test system comprises a loading lever having a first end arranged to rotate around a pivot between a first operational position and a second operational position. Additionally, the loading lever is operatively coupled to the wire rope, such that when the loading lever is at the first operational position the lever stretches the wire rope and when the loading lever is at the second operational position the loading lever does not stretch the wire rope.

In this aspect, a test system adapted to check the proper functioning of the fall-arrest device by simulating a fall is readily provided to an operator or maintenance personnel. The loading lever is operatively coupled to the wire rope. As the loading lever rotates around a pivot to a first operational position, the wire rope is stretched. Moreover, as the loading lever rotates from the first operational position to the second operational position, the loading lever releases the wire rope. Thereby a sudden release of the pressure previously exerted to the wire rope at the first operational position of the loading lever is achieved.

Consequently, the wire rope may be released and a displacement of the wire rope sufficient to reach a speed of the wire rope relative to the elevator cabin above the predetermined threshold. As a result, the driven roller may be driven by the wire rope and the overspeed detector may detect a speed of the driven roller above the predetermined threshold, thus causing the clamping of the wire rope by the clamping mechanism. Proper functioning of the fall-arrest device can thus be checked by an operator using a simple and easy-to-use test system. Furthermore, the test system does not require long preparation times. Particularly, the system is a highly reliable test as compared to the "stomp test" since the "stomp test" depends on a random force exerted by a stomp to activate the fall-arrest device.

In some examples, a locking mechanism configured to lock the loading lever at the first operational position may be provided. The loading lever may be locked at the first operational position by an operator. Once the loading lever is locked, the same operator may operate the remaining mechanisms of the test system in order to test the fall arrest device. Thus, a single operator may perform the test.

In a further aspect, an elevator system comprising an elevator cabin, a traction system to operate the elevator cabin and a fall-arrest device test system according to any of the examples herein described is provided.

The displacement of the wire rope can hereby further be combined with a displacement of an elevator cabin in a direction opposite to the direction of displacement of the wire rope. Thus, a suitable increase in the speed of the wire rope with respect to the fall-arrest device in order to activate said fall-arrest device is achieved.

In yet a further aspect, the present disclosure provides a wind turbine comprising such an elevator system.

In yet a further aspect, the present disclosure provides a method for testing a fall-arrest device. The fall-arrest device comprises a clamping mechanism and an overspeed detector. The overspeed detector comprises a driven roller arranged to be driven by a wire rope and the clamping mechanism is configured to clamp the wire rope when the overspeed detector detects a speed of the driven roller above a predetermined threshold. The method comprises providing an elevator operated by a traction mechanism. The method further comprises stretching the wire rope, displacing the elevator using the traction system such that the wire rope is displaced in a second direction opposite to a first direction relative to the elevator, and substantially simultaneously releasing the wire rope and thereby displacing the wire rope in the second direction.

In this aspect, the wire rope may be stretched. As the elevator is displaced in a first direction, the wire rope is displaced in a second direction, opposite to the first direction, with respect to the elevator (and thus the fall arrest device). At the same time or while the elevator is moving, the wire rope may be released and further displaced in the second direction. Using a fall arrest device that incorporates a driven roller configured to be rotated by the wire rope and an overspeed detector configured to detect a speed of the driven roller above a predetermined threshold, the sum of the relative displacements of the elevator cabin with respect to the wire may be accurately determined and used a trigger for tripping the fall arrest device. The correct functioning of the fall arrest device can be reliably tested. Both the speed of the elevator cabin for the test and the tension to be applied to (and released from) the wire rope may be standardised.

Throughout the present description and claims, an elevator path is to be understood as a space or passage through which the elevator can travel upwards and downwards. In a wind turbine tower, the elevator path is thus defined inside the tower. There may be a closed space inside the tower along which the cabin travels. Alternatively, the space inside the tower may be open. Throughout the present description and claims, an overspeed detector may be any suitable speed detection mechanism. Such speed detection mechanisms may preferably be configured to compare a detected speed with a predetermined threshold and when the detected speed is higher than the threshold, an alarm signal may be issued or an alarm mechanism may be activated.

### BRIEF DESCRIPTION OF THE DRAWINGS

Non-limiting examples of the present disclosure will be described in the following, with reference to the appended drawings, in which:
Figure 1 is a perspective view of an example of a fall-arrest device;
Figures 2a - 2c show longitudinal cross-sectional views and a cross-sectional top view of a fall-arrest device which may the same or similar to the fall-arrest device shown in figure 1;
Figures 3a - 3c schematically illustrate an example of a test system for testing a fall-arrest device including a toggle clamp mechanism according to one implementation. The fall arrest device used in the example of figures 3a - 3c may be the same or similar to the fall-arrest device shown in figures 2a - 2c;
Figures 4a - 4b schematically illustrate an example of a toggle clamp mechanism which has a similar behaviour to the toggle clamp mechanism shown in figures 3a - 3c;
Figures 5a - 5b illustrate another example of a test system for testing a fall-arrest device which may be the same or similar to the fall-arrest device shown in figures 2a - 2c, and
Figure 6 is an illustration of a block diagram describing an example of a method for testing a fall-arrest device.

### DETAILED DESCRIPTION OF EXAMPLES

In these figures the same reference signs have been used to designate matching elements.

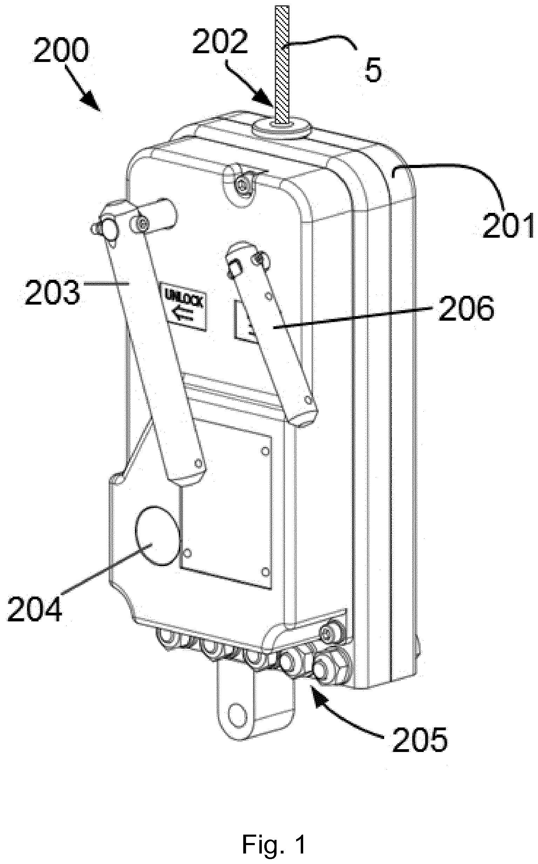

Figure 1 schematically illustrates a fall-arrest device. The fall-arrest device 200 of figure 1 is mounted in/on an elevator car/cabin, and the fall-arrest device comprises a housing 201 having an upper wire rope entry 202, an unlocking lever 203 and an inspection window 204. The housing further comprises a lower wire rope exit 205. Also indicated in figure 1 is an emergency locking lever 206. The wire rope 5 passes through the fall-arrest device 200.

In some examples, the wire rope 5 may be the hoisting wire rope of an elevator. In other examples, a dedicated safety wire rope in addition to the hoisting or traction wire rope of the elevator may be provided.

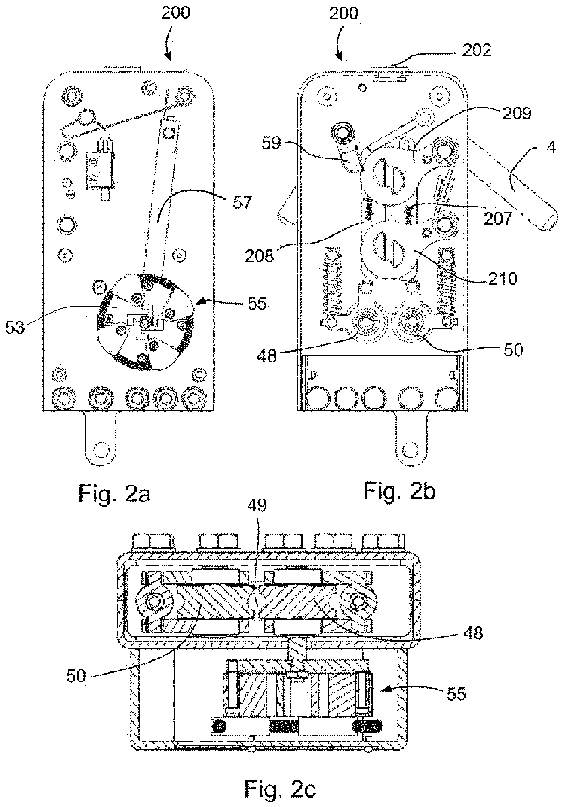

Figures 2a - 2c schematically illustrate cross-sectional views of a safety device 200 similar to the one shown in figure 1. In the interior of the housing of the safety device 10, at least one safety mechanism is provided. The safety mechanism acts on the wire rope.

Figure 2b illustrates an entry hole 202 for a wire rope. The wire rope passes in between the clamping jaws 207, 208 of upper clamp 209 and lower clamp 210. In normal operation, the clamping jaws are "open", and there is substantially no contact between the wire rope and the clamping jaws. The jaws are in normal operation prevented from closing by blocking element 59. If in operation an overspeed of the wire rope is detected (this indicates that the elevator to which the safety device is mounted is falling or that there is a malfunction in the traction system), the overspeed detector trips which moves the blocking element 59 and allows the jaws 207, 208 to close. The elevator is thus prevented from falling.

The overspeed detection and trip mechanism may comprise a first driven roller 48 which is in contact with the wire rope. As the wire rope moves, the roller 48 is driven and rotates. The first driven roller 48 is operatively coupled with the driven roller of the centrifugal overspeed detector 55 shown in figure 2a. Both the driven roller 48 and the driven roller of the overspeed detector 55 may be mounted on the same axle or shaft.

The overspeed detector 55 may comprise a plurality of weights 53, which are configured to move outwards as the detector rotates due to the centrifugal forces acting on them. If the driven roller rotates too fast (i.e. this may indicate an unsafe condition caused by e.g. a traction hoist malfunction and/or electromagnetic brake malfunction), the weights 53 move outwardly to such an extent that the detector trips: the weights contact lever 57, which releases the blocking element 59 from its original position. When the detector trips, as explained before, the clamping jaws close down and the elevator comes to a halt.

In order to ensure that the first driven roller 48 is in fact driven by the movement of the wire rope, a pressure roller 50 may force both of them in contact with each other. Reference sign 49 indicates the space between the first driven roller 48 and the pressure roller 50 through which the wire rope passes. Both the pressure roller 50 and the driven roller 48 are constantly in contact with the tensioned wire rope.

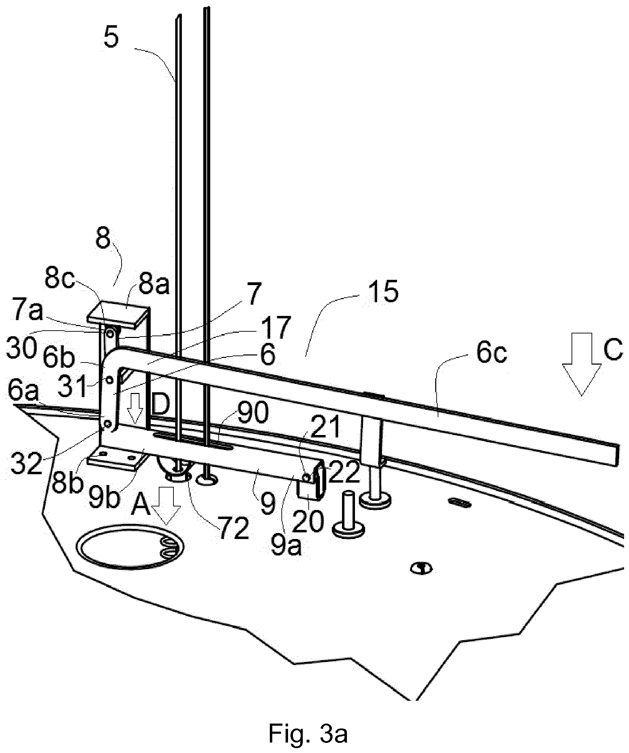

Figures 3a - 3c schematically illustrate an example of a test system for testing a fall-arrest device which may be substantially the same or similar to the fall-arrest device shown in figures 2a - 2c. Even though in the following, reference will be made to such a fall-arrest device, it should be clear that a similar teaching may be applied to different kinds of fall-arrest devices: e.g. the clamping mechanism may be different from the one described before, and also the overspeed detector may be different. The overspeed detector might be a centrifugal overspeed detector, but does not necessarily need to be of this type.

Figure 3a shows a loading lever 9. The loading lever 9 extends from a first end 9a to a second end 9b and may comprise an elongated through-hole 90. The loading lever 9 may be configured to be mounted around the wire rope 5 using the through-hole 90. Alternatively, some other ways to arrange the loading lever 9 with respect to the wire rope 5 may be foreseen. The lever 9 further comprises a support 72. The support 72 may be e.g. welded to the loading lever 9. Thus, the support 72 may jointly be displaced with the loading lever 9. The wire rope 5 in this example is a dedicated safety wire rope.

Furthermore, in this example a pivot bracket 20 is provided. In this example, the lever is mounted on and about either side of the pivot bracket 20. As such, the loading lever in this particular example may have a substantially U-shaped cross-section. The first end 9a of the loading lever 9 may be rotatably attached to the pivot 20 using a pin 21. Particularly, the pin 21 may be passed through a first hole 22 defined in the first end 9a, a first hole (not visible) defined in the pivot 20, a second hole (not visible) defined in the pivot 20 and a second hole (not visible) defined in the first end 9a. Thus, the pin 21 may define a support axis about which the end 9a of the loading lever 9 may pivot.

A portion of the loading lever is operatively coupled to the wire rope 5 in such a way that when the lever pivots and that portion is moving downwardly, the wire rope is pulled downwards. A tension in the wire rope increases in a corresponding manner. In some examples, the wire rope may be stretched e.g. 50 - 100 mm. However, in other examples, stretching of the wire rope outside this range is possible.

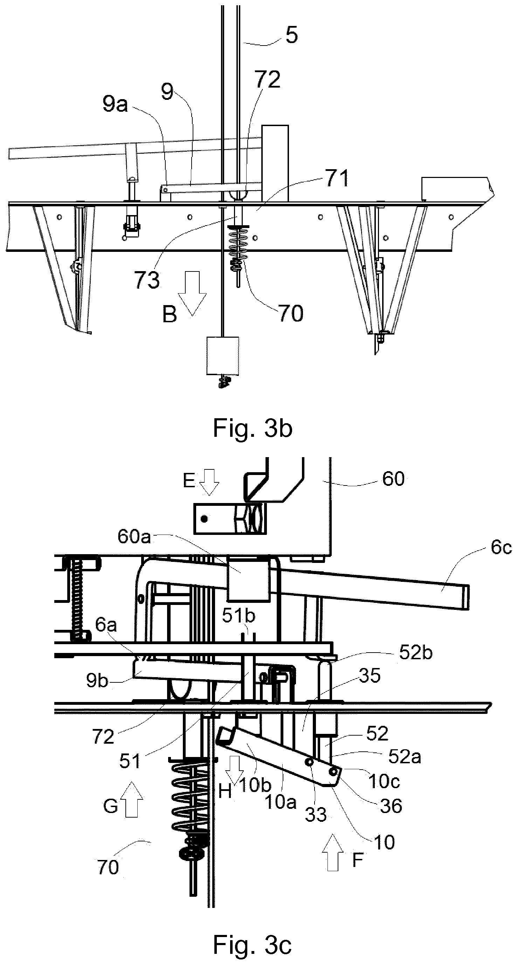

Additionally, as shown in figure 3b, a biasing device 71 may be provided. The biasing device 71 comprises a spring 70 and a cylinder 73 that acts on the spring 70. The biasing device 71 may be coupled to the wire rope 5- During normal operation, the spring 70 does not form part of the test system. Instead, the spring 70 is configured to provide the necessary tautness to the wire rope 5 such that a proper operation of the fall arrest device is achieved. In this example, the spring, e.g. a helicoidal spring 70 may be compressed by the support 72 of the loading lever 9 pushing against the cylinder 73 that acts on the spring 70. As a result, the wire rope 5 may be stretched. Springs of all different characteristics and sizes are readily available and easily mountable. The force applied in order to stretch the wire rope 5 in the direction of the arrow B may be very accurately controlled using springs. In normal operation, once the pressure exerted by the support 72 is removed, the spring 70 still provides the necessary tautness to the wire rope such that a proper operation of the fall arrest device is achieved

Again in figure 3a, when a force is exerted at or near the end 9b of the loading lever 9 in the direction of the arrow (arrow A), the loading lever is displaced to a first operational position such that the support 72 of the lever 9 presses the cylinder of the biasing device 71. As a result, as shown in figure 3b, the spring 70 of the biasing device 71 is compressed and, at the same time, the wire rope 5 is stretched in the direction of the arrow (arrow B).

Furthermore, an example of a locking mechanism 15 is shown in figure 3a. The locking mechanism 15 may be mounted using a mounting bracket 8. The bracket 8 may include two spaced apart flanges 8a, 8b. The flanges 8a, 8b may be parallel with respect to each other.

The locking mechanism 15 in this example is embodied as a toggle clamp mechanism 17. The toggle clamp mechanism 17 may comprise a first toggle lever 7 and a second toggle lever 6. The first toggle lever 7 may comprise a first end 7a pivotally connected to a rim 8c of the flange 8a using a pin 30. In the depicted example, the pin 30 is passed through a hole defined in the first end 7a, and then through a hole defined in the rim 8c of the flange 8a. Thus, the pin 30 defines a support axis about which the first toggle lever 7 may pivot.

The first toggle lever 7 further comprises a second end pivotally connected to a middle portion 6b of the second toggle lever 6 in this case using a pin 31. The pin 31 defines a support axis about which the second end of the first toggle lever 7 may pivot with respect to the middle portion 6b of the second toggle lever 6.

The second toggle lever 6 may further comprise a first end 6a pivotally connected at or near the second end 9b of the loading lever 9 using a pin 32. Thus, one more time, the pin 32 defines a support axis about which the end 6a of the second toggle lever 6 may pivot with respect to the lever 9.

The second toggle lever 6 may further comprise a handle 6c. In this particular example, the handle 6c is shown to be integrally formed with the second toggle lever 6. Alternatively, the handle may be attached to the second toggle lever 6. The handle 6c is configured to actuate the toggle mechanism 17 between clamping and release positions. Maintenance personnel can use the handle 6c in order to test the fall-arrest device as will be explained later on.

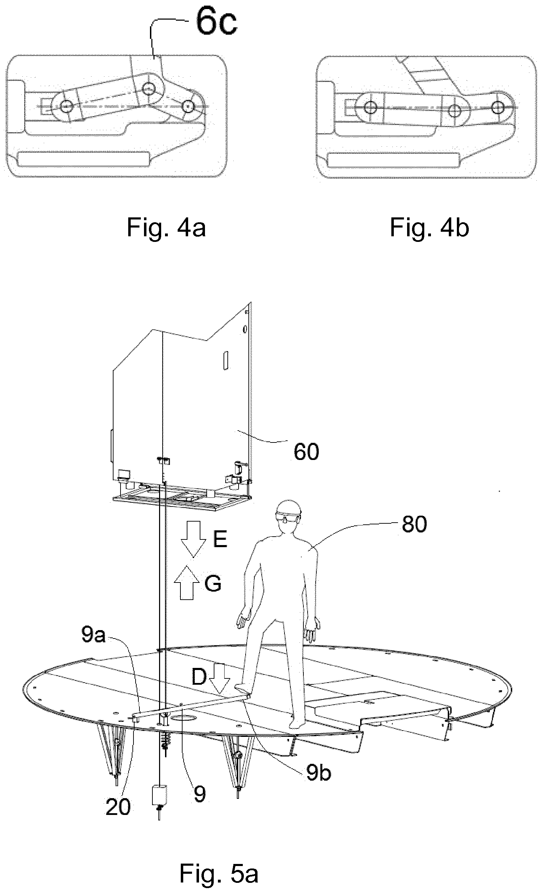

Figures 4a and 4b schematically illustrate the working principle of a toggle clamp mechanism.

Following the example, when a force is exerted to the handle 6c in the direction of the arrow (arrow C), the toggle mechanism is moved from the release position, as schematically shown in figure 4a, to the clamping position, as schematically shown in figure 4b. The connection between levers 6, 7 transmits the movement of the handle 6c to the ends 7a and 6a. Therefore, by moving the handle 6c from the release position to the clamping position, the end 6a of the toggle mechanism can push the end 9b of the lever 9 in the direction of the arrow (arrow D).

As a result, the toggle mechanism is forced to rotatably move the loading lever 9 to a first operational position thereby stretching the wire rope 5 in the direction of the arrow (arrow A), as previously commented with reference to figure 3b. The lever 9 may further remain locked in the first operational position due to the force exerted by the toggle mechanism.

A toggle clamp mechanism as used herein is a mechanism comprising a geometrical linkage to amplify a low operator input force to a high output clamping force. This is achieved using the "over centre" principle, which provides a positive lock, preventing the clamp from unlocking once moved beyond the neutral axis. Thus, when an operator has moved the lever and stretched the cable, the toggle mechanism has been moved beyond the neutral axis. The operator can thus release the lever and the wire rope will not be released.

Figure 3c illustrates an example of a trigger that may be used to release the stretched wire rope. The trigger comprises a trigger lever 10. The trigger lever 10 that is shown here extends from a first end 10b to a second end 10c. The trigger lever 10 may be substantially U-shaped in cross-section, although some other suitable shapes are possible.

The trigger lever 10 may further comprise a portion 10a e.g. a middle portion arranged to rotate around a pivot. A pin 33 may be provided that defines a support axis about which the portion 10a of the trigger lever 10 may pivot with respect to an elongated beam 35.

Moreover, a first and a second displaceable elongated beams (or rods) 51, 52 may be provided. Each elongated beam 51, 52 extends from a first end to a second end.

A first end of the elongated beam 51 has a round shape. The first end is configured to push the end 10b when, in operation, is displaced in the direction of the arrow (arrow H). Additionally, a pin 36 may be provided. The second end 10c of the trigger lever 10 is pivotally attached to a first end 52a of the elongated beam 52 using the pin 36.

Furthermore, an elevator system comprising a cabin 60 is provided. The elevator may be moved upwards and /or downwards along the elevator path using a traction system (not shown). Particularly, the elevator may be moved downwards in the direction of the arrow (arrow E).

With a test system substantially as hereinbefore described, at least one example of the test may be performed as follows: an operator may actuate the handle 6c such that the toggle mechanism is moved to the clamping position, thus pushing the end 9b of the lever by the end 6a (and thus displacing the lever 9 to the first operational position and stretching the wire rope). The cabin 60 is moved downwards in the direction of the arrow (arrow E) by e.g. the same or another operator.

When the elevator reaches the bottom most position, a force is exerted by the elevator cabin to the end 51 b of the first elongated beam 51 in the direction of the arrow (arrow E) by e.g. a cabin support 60a or some other permanent element attached to the cabin 60 moving in the direction of the arrow (arrow E). The first elongated beam 51 is thus displaced downwards in the direction of the arrow (arrow H).

Furthermore, due to the pressure exerted by the elongated beam 51 to the end 10b, the trigger lever 10 may be rotated around the pivot 33 between a first operational position to a second operational position thereby displacing the second elongated beam 52 upwards (in the direction of the arrow F). At the same time, the end 52b of the second elongated beam 52 may actuate the handle 6c of the toggle clamp mechanism in the direction of the arrow (arrow F).

By actuating the handle 6c in the direction of arrow F, the toggle mechanism is moved from the previously set clamping position, which may be the same or similar to the clamping position schematically depicted in figure 4b, to the release position, which may be the same or similar to the release position schematically depicted in figure 4a. Particularly, by pushing the handle 6c in the direction of arrow F, the toggle clamp mechanism is moved beyond the neutral axis and thereby released. The support 72 of the loading lever 9 stops pushing the cylinder of the biasing device 71. Therefore, the previously compressed spring 70 is released. Moreover, the loading lever 9 is further rotatably moved from the first operational position to the second operational position by the cylinder of the biasing device 71 due to the force exerted in the direction of the arrow (arrow G) by the wire rope recovering its original length.

Following the example, the force in the direction of the arrow E previously applied by the support 72 (and thus the loading lever 9) to the biasing device, stretching the wire rope 5, has already been removed. Thus, as commented above, the spring 70 is decompressed a little bit. The stretching previously exerted by the loading lever 9 to the wire rope is thus removed. As a result, the wire rope 5 is also suddenly released in the direction of the arrow (arrow G) (and thus a sudden increase in the speed of the wire rope 5 in the direction of the arrow G is achieved).

At the same time, the elevator 60 may keep moving in the direction of the arrow (arrow E) and the wire rope 5 is further displaced in the direction of the arrow (arrow G) with respect to the cabin 60 (and thus the fall-arrest device).

With such an arrangement, a sudden increase in the speed of the wire rope 5 in the direction of the arrow G is achieved. The wire rope 5 may reach a speed relative to the fall arrest device above the speed threshold of the overspeed detector. Thus, an overspeed condition of the wire rope 5 may be detected by the fall-arrest device as described in figures 2a and 2b. As commented above, As previously commented, the overspeed condition may include the temporary speed increase of the wire rope in the direction of the arrow G with respect to the cabin 60 being displaced in the direction of the arrow E and the further temporary speed increase of the wire rope 5 in the direction of the arrow G by abruptly releasing the wire rope.

The overspeed condition simulates a real overspeed situation indicating to the fall-arrest device that the elevator to which the safety device is mounted is falling or that a malfunctioning of the traction system is detected. As a result, as shown in figures 2a - 2c, the overspeed detector rotates and trips which moves the blocking element and allows the jaws to close. The proper functioning of the fall-arrest device is thus tested in an easy and reliable manner by simple means.

Figures 5a - 5b illustrate another example of a test system for testing a fall-arrest device which may the same or similar to the fall-arrest device shown in figures 2a - 2c.

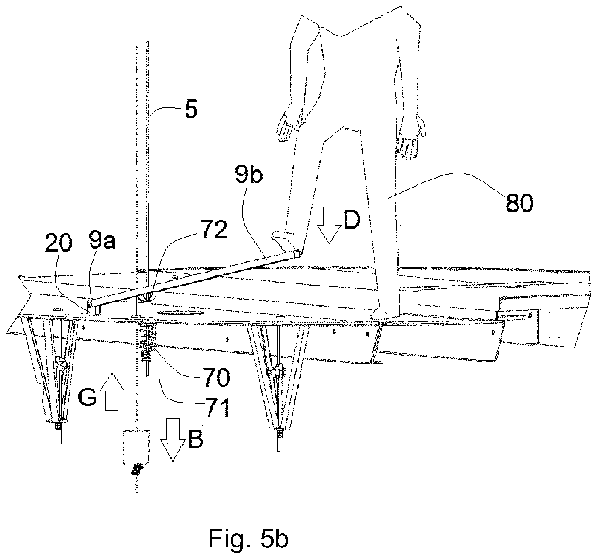

In the example shown in figures 5a - 5b, a loading lever 9 is provided. As shown in figure 5b, when a force is exerted to an end 9b of the loading lever 9 e.g. by an operator 80 in the direction of the arrow (arrow D), the end 9a of the lever 9 rotates around a pivot 20, thus the lever 9 is rotatably displaced to a first operational position. The biasing device 71 is thus pressed by the support 72 forming part of the lever 9. Particularly, a cylinder acting on the biasing element 70 is pressed and the biasing element 70 is deformed the direction of the arrow (arrow B). As a result, a wire rope 5, operatively coupled to the lever 9, is stretched in the direction of the arrow (arrow B).

Again in figure 5a, an elevator system comprising an elevator cabin 60 as hereinbefore described may be provided. The cabin 60 may be moved in the direction of the arrow (arrow E) by a second operator inside the elevator cabin. As a result, the wire rope 5 is displaced in the direction of the arrow (arrow G) with respect to the cabin moving downwards (in the direction of the arrow E).

At the same time, the force exerted to the end 9b of the loading lever 9 e.g. by the first operator 80 may be removed. Consequently, the end 9a of the lever 9 may rotate around the pivot 20 thereby rotatably displacing the lever from a first operational position to a second operational position. Once the force exerted by the lever to the biasing device is removed, the wire rope recovers its original length, thus a sudden displacement of the wire rope 5 in the direction of the arrow G is provided. Therefore, a sudden increase in the speed of the wire rope 5 in the direction of the arrow G is achieved.

As previously commented, an overspeed condition is created and the fall-arrest device is tripped. The fall-arrest device is thus tested in an easy and reliable manner by simple means.

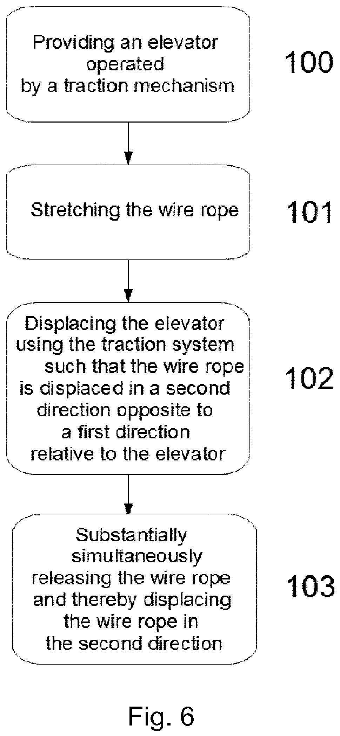

Figure 6 is an illustration of a block diagram describing an example of a method for testing a fall-arrest device.

A fall-arrest device may be provided as hereinbefore described. The fall arrest device may comprise a clamping mechanism and an overspeed detector, the overspeed detector comprising a driven roller arranged to be driven by a wire rope and wherein the clamping mechanism is configured to clamp the wire rope if the overspeed detector detects a speed of the driven roller above a predetermined threshold,

At block 100, an elevator operated by a traction mechanism may be provided. This may involve that the elevator may be moved upwards / downwards along the elevator path using the traction mechanism.

At block 101, the wire rope may be stretched. The stretching of the wire rope may be performed as described in previous examples. At block 102, the elevator may be displaced in a first direction, e.g. downwards. The wire rope is thereby displaced in a second direction, e.g. upwards with respect to the elevator (and thus the fall-arrest device).

At block 103, while the elevator cabin is being driven downwards, the previously stretched wire rope is released and thereby displaced in an upwards direction. As a result, the wire rope may reach a speed relative to the fall arrest device above the speed threshold of the overspeed sensor of the fall arrest device. The overspeed detector may thus detect the overspeed condition as explained with reference to figures 2a - 2c. Consequently, the wire is clamped and the fall-arrest device is thus tested.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A fall-arrest device test system for testing a fall-arrest device configured to be mounted around a wire rope of an elevator, the fall-arrest device comprising:
- a clamping mechanism and an overspeed detector, the overspeed detector comprising a driven roller arranged to be driven by a wire rope and wherein the clamping mechanism is configured to clamp the wire rope if the overspeed detector detects a speed of the driven roller above a predetermined threshold,
the test system comprising:
- a loading lever having a first end arranged to rotate around a pivot between a first operational position and a second operational position, and the loading lever being operatively coupled to the wire rope, such that when the loading lever is at the first operational position the lever stretches the wire rope and when the loading lever is at the second operational position the loading lever does not stretch the wire rope.

2. A test system according to claim 1, wherein the system further comprises:
- a locking mechanism configured to lock the loading lever at the first operational position.

3. A test system according to claim 2, wherein the locking mechanism comprises:
- a bracket;
- a toggle clamp mechanism comprising:
- a first toggle lever comprising:
• a first end pivotally connected to a flange of the bracket, and
• a second end,
- second toggle lever comprising:
• a portion pivotally connected to the second end of the first toggle lever, and
• being pivotally connected to a portion of the loading lever,
- a handle configured to actuate the toggle mechanism between clamping and release positions such that in the clamping position of the toggle mechanism the loading lever is locked at the first operational position and in the release position of the toggle mechanism the loading lever is released.

4. A test system according to claim 3, wherein the handle is integrally formed with the second toggle lever.

5. A test system according to any of claims 2 - 4, wherein the system further comprises:
- a trigger configured to release the loading lever.

6. A test system according to claim 3, wherein the system further comprises a trigger configured to release the loading lever, and wherein the trigger is integrally formed with the handle of the toggle clamp mechanism.

7. A test system according to claim 5 or 6, wherein the trigger comprises:
- a trigger lever having a portion of the lever arranged to rotate around a pivot between a first operational position and a second operational position, wherein the lever at the second operational position actuates the toggle mechanism such that a release position of the toggle mechanism is achieved.

8. An elevator system comprising the fall-arrest device test system according to any of claims 1 - 7, an elevator cabin and a traction system to operate the elevator.

9. A wind turbine comprising an elevator system according to claim 8.

10. A method for testing a fall-arrest device, wherein the fall-arrest device comprises:
- a clamping mechanism and an overspeed detector, the overspeed detector comprising a driven roller arranged to be driven by a wire rope and wherein the clamping mechanism is configured to clamp the wire rope if the overspeed detector detects a speed of the driven roller above a predetermined threshold,
the method comprising:
- providing an elevator operated by a traction mechanism;
- stretching the wire rope by pulling the wire rope in a first direction;
- displacing the elevator using the traction system in the first direction such that the wire rope is displaced in a second direction opposite to a first direction relative to the elevator, and
- substantially simultaneously releasing the wire rope and thereby displacing the wire rope in the second direction.

11. A method according to claim 10, further comprising:
- providing a loading lever having a first end arranged to rotate around a pivot between a first operational position and a second operational position, the loading lever being operatively coupled to the wire rope, such that when the loading lever is at the first operational position the lever stretches the wire rope and when the loading lever is at the second operational position the loading lever does not stretch the wire rope;
- pivotally rotating the loading lever to the first operational position to stretch the wire rope.

12. A method according to claim 11, further comprising locking the loading lever at the first operational position.

13. A method according to claim 12, further comprising a trigger to release the loading lever.

14. A method according to claim 13, wherein the trigger is operated by the elevator moving in the first direction.

15. A method according to according to claim 11, manually rotating the loading lever to the first operational position to stretch the wire rope, and manually releasing the loading lever.
